# FASCICULE DE BREVET EUROPEEN

(11) **EP 0 342 460 B1**
(45) Date de publication et mention de la délivrance du brevet: **18.11.1993**
(21) Numéro de dépôt: 89108224.0
(22) Date de dépôt: 08.05.1989
(51) Int. Cl.: H04L 7/04

(54) **Dispositif de synchronisation de trame pour un train numérique synchrone partagé en blocs au moyen d'un code par blocs et structuré en trames**
Anordnung zur Rahmensynchronisierung einer in Blöcke aufgeteilten Synchronen Digitalfolge durch einen im Rahmen strukturierten Blockcode
Device for the frame synchronisation of a synchronous digital sequence by way of a block code incorporated in frames

(30) Priorité: 18.05.1988 FR 8806642
(43) Date de publication de la demande: 23.11.1989
(73) Titulaire: ALCATEL CIT, 75008 Paris (FR)
(72) Inventeur: Gherardi, Bernhard, F-91090 Lisses (FR)
(74) Mandataire: Weinmiller, Jürgen

(56) Documents cités:
- PATENT ABSTRACTS OF JAPAN, vol. 10, no. 283 (E-440)[2339], 26 septembre 1986, page 48 E 440 & JP-A-61 101 138
- PATENT ABSTRACTS OF JAPAN, vol. 9, no. 65 (E-304)[1788], 26 mars 1985, page 136 E 304 & JP-A-59 204 337
- PATENT ABSTRACTS OF JAPAN, vol. 10, no. 91 (E-394)[2148], 9 septembre 1986, page 148 E 394 & JP-A-60 235 549
- PATENT ABSTRACTS OF JAPAN, vol. 10, no. 251 (E-432)[2307], 28 août 1986, page 7 E 432 & JP-A-61 78 239

## Description

Les signaux de transmission numérique synchrone à multiplexage temporel utilisent, en général, une structure de trames repérées par des mots de verrouillage permettant la localisation des données en réception, et des codes de transmission dont les codes par blocs qui introduisent une certaine redondance facilitant la récupération du rythme et la détection des erreurs de transmission, et adaptent la forme des signaux aux caractéristiques des canaux de transmission.

L'utilisation d'un code par blocs entraîne une partition du train numérique en blocs successifs de même importance de l'ordre de la dizaine de données tandis que l'utilisation de trames entraîne une partition du train numérique en séquences successives de longueurs identiques, relativement importantes pouvant dépasser plusieurs centaines de données, repérées par une configuration particulière d'éléments de même formes que les données, localisés ou répartis, dite mot de verrouillage de trame. Les partitions en blocs et en trames du train numérique sont compatibles en ce sens que la longueur d'une trame est un multiple de celle d'un bloc, une trame renfermant plusieurs dizaines de blocs successifs, et que les mots de verrouillage de trame ont tous la même position par rapport aux limites des blocs.

La synchronisation de trame consisté à synchroniser une base de temps trame engendrant un signal de cadencement de trame, sur la réception des mots de verrouillage de trame. Une matière usuelle de l'obtenir consiste à rechercher systématiquement dans le train numérique reçu une configuration identique à celle d'un mot de verrouillage de trame et à considérer qu'il s'agit bien d'un mot de verrouillage de trame tant qu'elle se répéte dans le train numérique reçu avec la périodicité d'une trame. Cette manière de faire a l'inconvénient d'entraîner, à chaque perte de synchronisation de trame, un processus de recherche de synchronisation relativement lent dès qu'il y a une importante probabilité d'imitation des mots de verrouillage de trame par las données.

Pour lutter contre cette lenteur du processus de resynchronisation, sans pour autant utiliser des mots de synchronisation de trame de longueur excessive, il est connu notamment par le brevet américain 4 316 284 d'introduire dans chaque trame un mot de code cyclique dont on connait l'évolution de trame en trame pour une vérification à postériori de la bonne synchronisation de trame. Ce mot de code cyclique dont les configurations variables d'une trame à l'autre sont très peu imitables par les données permet de détecter très vite, pratiquement sur la durée d'une trame, une synchronisation incorrecte et de l'abandonner sans attendre pour une nouvelle tentative de synchronisation sur la prochaine configuration de mot de verrouillage détectée dans le train numérique reçu. On évite ainsi de s'accrocher sur plusieurs trames successives à des imitations du mot de verrouillage.

Il est également connu, dans le cas d'un train numérique synchrone partagé en blocs par un code par blocs et structuré en trames repérées par des mots de verrouillage, de vérifier à postériori la bonne synchronisation de trame, par un test sur le taux d'erreurs de transmission détecté à l'aide du code par blocs, ce taux d'erreurs devant rester faible, en de ça d'un certain seuil, au cours de chaque trame si le mot considéré comme mot de verrouillage trame respecte la position particulière que celui-ci doit avoir par rapport à la partition en blocs définie par le code.

Il est en outre connu, du document Patent Abstracts of Japan, vol. 9, n° 65 (E-304) [1788], 26 mars 1985, page 136E304,& JP-A-59 204 337, un dispositif de synchronisation de trame pour un train numérique synchrone partagé en blocs au moyen d'un code par blocs et structuré en trames repérées par des mots de verrouillage, comportant un circuit de recherche de configuration de mot de verrouillage opérant sur le train numérique et engendrant un signal de reconnaissance à chaque configuration reconnue, une base de temps trame délivrant un signal d'horloge au rythme des trames, un circuit de recherche de découpage de blocs repérant dans le train numérique des emplacements possibles de transitions entre blocs de données, une base de temps bloc délivrant un signal d'horloge bloc au rythme des blocs, et un circuit de synchronisation de la base de temps bloc contrôlé par le circuit de recherche de découpage de blocs.

La présente invention a pour but d'accélérer le processus de resynchronisation de trame dans le cas d'un train numérique synchrone partagé en blocs par un code par blocs et structuré en trames et, par conséquent, de réduire les pertes d' informations au cours d'une reprise de synchronisation de trame.

Ce but est atteint par le dispositif tel que défini par la revendication 1.

Lorsque la synchronisation trame n'est pas établie, ce dispositif tente une resynchronisation uniquement sur les configurations de mot de verrouillage apparaissant dans le train numérique correctement positionnées par rapport à la partition en blocs ce qui élimine une bonne part des imitations et accélère grandement le processus de resynchronisation. Une fois la synchronisation établie, ce dispositif en contrôle le maintien en vérifiant que la configuration de mot de verrouillage détectée dans le train numérique et retenue comme mot de verrouillage se repéte avec la périodicité d'une trame, le rythme des fenêtres temporelles de recherche de configuration passant de la cadence bloc à celle de trame.

Avantageusement, la base de temps trame fonctionne à partir du signal d'horloge bloc et le circuit de contrôle d'acquisition de mots de verrouillage contrôle le circuit de synchronisation de la base de temps bloc de manière à l'activer en l'absence de sélection de configuration de mot de verrouillage sur plusieurs trames successives et à l'inhiber dès la reconnaissance de sélections de configurations de mot de verrouillage sur plusieurs trames successives. Cela permet, lorsque la synchronisation trame est établie, de laisser fonctionner librement la base de temps bloc et par conséquent la base de temps trame sans une synchronisation sur le découpage de blocs du train numérique qui pourrait être perturbée par des erreurs de transmission et qui risquerait à la longue d'entraîner une perte de verrouillage de trame.

D'autres caractéristiques et avantages de l'invention ressortiront de la description ci-après d'un mode de réalisation donné à titre d'exemple. Cette description sera faite en référence au dessin dans lequel :
- la figure 1 illustre la composition d'un train numérique binaire synchrone partagé en blocs à l'aide d'un code par blocs et structuré en trames repérées par un mot de verrouillage,
- la figure 2 est un schéma synoptique d'un dispositif de verrouillage de trame conforme à l'invention adapté au train numérique représenté à la figure 1,
- la figure 3 détaille le schéma d'un circuit de recherche de configuration de mot de verrouillage trame apparaissant dans le schéma synoptique de la figure 2 et
- la figure 4 détaille le schéma d'un circuit de contrôle d'acquisition de verrouillage trame apparaissant également dans le schéma synoptique de la figure 2.

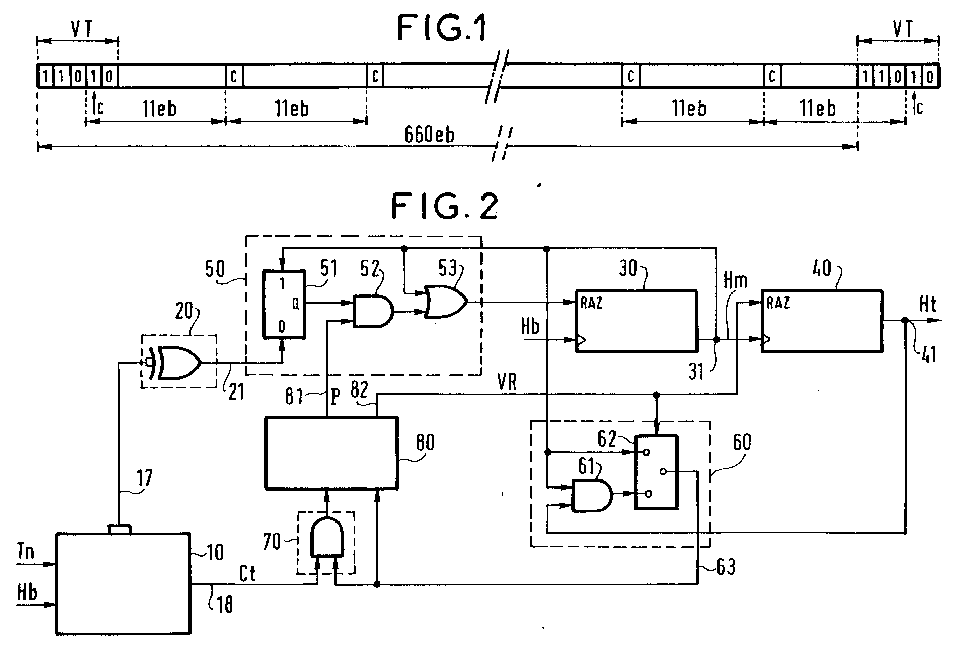

Le train numérique binaire synchrone illustré à la figure 1 est codé à l'aide d'un code de transmission par blocs de type 10B1C et structuré en trame de 660 bits à mot de verrouillage localisé.

Le code de transmission par blocs 10B1C consisté à partager les bits d'informations en mots de dix bits successifs et à ajouter à la fin de chaque mot un bit d'insertion C de valeur complémentaire à celle du bit d'information qui le précède immédiatement pour constituer des blocs de onze bits. Il garantit la présence dans le train numérique, d'au moins une transition tous les onze bits ce qui est suffisant pour l'asservissement d'un oscillateur récupérant le rythme bit du train numérique.

Chaque trame renferme exactement soixante blocs de onze bits successifs résultant du code de transmission 10B1C et commence par un mot de verrouillage localisé VT de configuration binaire 11010 dont le quatrième bit de valeur 1 est un bit d'insertion C.

Le dispositif de synchronisation de trame dont le schéma synoptique est illustré à la figure 2 est adapté à la structure de train numérique binaire synchrone qui vient d'être décrite. Il se compose principalement :
- d'un circuit 10 de recherche de configuration de mot de verrouillage de trame qui opère sur le train numérique synchrone reçu Tn à l'aide d'un signal d'horloge bit récupéré Hb,
- d'un circuit 20 de recherche de découpage de blocs qui opère sur le train numérique synchrone reçu Tn au cours de son passage par le circuit de recherche de configuration de mot et qui détermine des emplacements possibles de transitions entre blocs de données,
- d'une base de temps bloc 30 recevant le signal d'horloge bit récupéré Hb et délivrant un signal d'horloge bloc Hm ayant pour période la durée d'un bloc de données,
- d'une base de temps de trame 40 opérant à partir du signal d'horloge bit récupéré Hb prédivisé par la base de temps bloc 30 et délivrant un signal d'horloge trame Ht ayant pour période la durée d'une trame,
- d'un circuit 50 de synchronisation de la base de temps bloc 30 commandé par le circuit 20 de recherche de découpage de blocs et activé ou bloqué par un circuit 80 de contrôle d'acquisition de verrouillage de trame,
- d'un circuit 60 de définition de fenêtres temporelles élaborant à partir des signaux d'horloge bloc Hm ou trame Ht des bases de temps bloc 30 et trame 40 des fenêtres temporelles de recherche de configuration de mot de verrouillage soit au rythme des blocs, soit au rythme des trames, le choix du rythme étant fait par un circuit 80 de contrôle d'acquisition de verrouillage de trame,
- d'un circuit 70 de sélection de configuration de mot de verrouillage opérant sous la commande du circuit 10 de recherche de configuration de mot de verrouillage de trame et du circuit 60 de définition de fenêtres temporelles et
- dudit circuit 80 de contrôle d'acquisition de verrouillage de trame qui est connecté en sortie du circuit 70 de sélection de configuration de mot de verrouillage et qui commande à la fois le circuit 50 de synchronisation de la base de temps bloc 30 et le circuit 60 de définition de fenêtres temporelles.

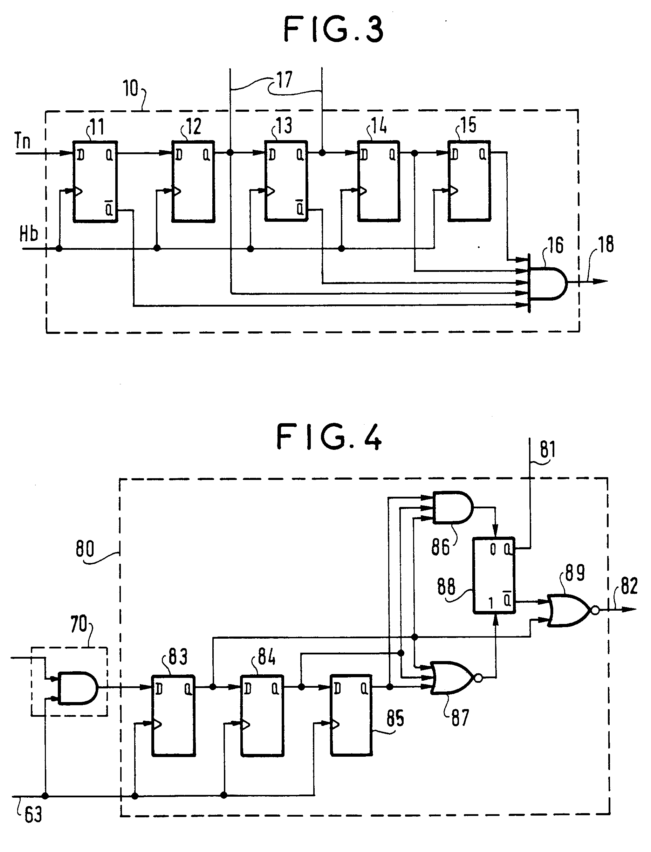

Le circuit 10 de recherche de configuration de mot de verrouillage de trame est détaillé à la figure 3. Il comprend un registre à décalage à cinq étages 11 à 15 et une porte logique de type "et" 16 à cinq entrées. Le registre à décalage reçoit en entrée le train numérique binaire synchrone reçu Tn. Ses étages 11 à 15, qui changent d'états entre les intervalles bit du train numérique reçu, sont cadencés par le signal d'horloge bit Hb récupéré à l'aide d'un oscillateur non représenté asservi en phase sur les transitions entre données du train numérique reçu Tn. La porte logique de type "et" 16 a ses cinq entrées connectées aux sorties adéquates complémentées ou non des cinq étages 11 à 15 du registre à décalage pour identifier la configuration des valeurs logiques 11010 d'un mot de verrouillage trame VT. Elle engendre un signal binaire de reconnaissance de configuration de mot de verrouillage Ct qui passe au niveau logique 1 sur un intervalle de temps bit de détection de ladite configuration alors qu'il est le reste du temps au niveau logique 0, ce signal Ct étant délivré sur une sortie 18 du circuit 10. Une sortie auxiliaire bifilaire 17 du circuit 10 donne un accès aux sorties non complémentées des deuxième et troisième étages 12 et 13 du registre à décalage pour le circuit de recherche de découpage de blocs 20.

Le circuit de recherche de découpage de blocs 20 est constitué, comme représenté à figure 2, par une porte logique de type "ou exclusif" à deux entrées. Il fournit en sortie 21, un signal binaire passant au niveau logique 1 sur chaque intervalle de temps bit du train numérique où deux données successives de valeurs différentes sont inscrites dans les deuxième et troisième étages 12, 13 du registre à décalage du circuit 10 de recherche de configuration de mot de verrouillage de trame. Cela se produit, entre autres occasions, à chaque intervalle de temps bit du train numérique où un bit d'insertion C du code 10B1C est inscrit dans le deuxième étage 12 du registre à décalage du circuit 10 de recherche de configuration de mot de verrouillage de trame, notamment, pendant chaque intervalle de temps bit du train numérique où le circuit 10 de recherche de configuration de mot de verrouillage trame détecte la configuration d'un véritable mot de synchronisation trame et engendre un signal de reconnaissance de configuration Ct au niveau logique 1.

La base de temps bloc 30 est constituée d'un compteur à remise à zéro synchrone avec une sortie 31 représentative de l'état de comptage "10" rebouclée sur son entrée de remise à zéro pour entraîner des cycles de comptage par onze. Ce compteur est incrémenté par le signal d'horloge bit Hb et change d'état de comptage entre les intervalles bit du train numérique reçu Tn. Il délivre sur sa sortie 31 un signal binaire d'horloge bloc Hm qui passe au niveau logique 1 pour l'état de comptage "10" et reste au niveau logique 0 pour les autres états de comptage.

Le circuit 50 de synchronisation de la base de temps bloc 30 contrôle le rebouclage entre la sortie et l'entrée de remise à zéro du compteur de la base de temps bloc 30. Il autorise, sans condition, des cycles répétitifs de comptage par onze ou fait dépendre la répétition des cycles de comptage par onze de l'état de sortie du circuit de recherche de découpage de blocs 20 selon que le verrouillage de trame est considéré comme acquis ou perdu par le circuit de contrôle d'acquisition de verrouillage de trame 80. Il comporte pour ce faire, comme représenté à la figure 2, une bascule de type RS 51, une porte logique de type "et" 52 à deux entrées et une porte logique de type "ou" 53 à deux entrées. La bascule de type RS 51 a une entrée de remise à zéro prioritaire sur son entrée de remise à un. Elle est connectée par son entrée de remise à zéro à la sortie 21 du circuit de recherche de découpage de blocs 20 et par son entrée de remise à un à la sortie 31 de la base de temps bloc 30.

La porte logique de type "et" 52 est connectée par une entrée à la sortie de la bascule de type RS 51 et par l'autre entrée à une sortie 81 du circuit de contrôle d'acquisition de verrouillage de trame 80. La porte logique de type "ou" 53 est connectée par une entrée à la sortie de la porte logique de type "et" 52 et par l'autre entrée à la sortie 31 de la base de temps bloc 30.

Le circuit 50 de synchronisation de la base de temps bloc 30 est activé ou désactivé par un signal binaire P de perte de verrouillage au niveau logique 1 ou 0 engendré par le circuit 80 de contrôle d'acquisition de verrouillage de trame sur sa sortie 81.

Un signal binaire P de perte de verrouillage au niveau logique 0 signifiant un verrouillage de trame acquis désactive le circuit 50 de synchronisation de la base de temps bloc 30 car il entraîne un niveau logique 0 en sortie de la porte logique de type "et" 52 qui autorise un rebouclage permanent par la porte logique de type "ou" 53, entre la sortie et l'entrée de remise à zéro du compteur de la base de temps bloc 30. Le compteur de la base de temps bloc 30 exécute alors librement des cycles répétitifs de comptage par onze.

Un signal binaire P de perte de verrouillage au niveau logique 1 signifiant une perte de verrouillage de trame active le circuit 50 de synchronisation de la base de temps bloc 30. Il entraîne, en sortie de la porte logique de type "et" 52, une recopie de l'état logique de la sortie de la bascule de type RS 51 qui contrôle alors le rebouclage par la porte logique de type "ou" 53, entre la sortie et l'entrée de remise à zéro du compteur de la base de temps bloc 30. A l'état logique 1, cette bascule de type RS 51 suspend le rebouclage et maintient le compteur de la base de temps bloc 30 à l'état de comptage 0 tandis qu'à l'état logique 0 elle autorise le rebouclage et le fonctionnement du compteur de la base de temps bloc 30. Chaque passage du compteur de la base de temps bloc 30 l'état de comptage "10" met la bascule RS 51 à l'état logique 1 si cette dernière ne reçoit pas dans le même temps un ordre de mise à zéro prioritaire de la part du circuit de recherche de découpage de blocs 20. Cela a pour effet de bloquer le compteur de la base de temps bloc 30 à l'état de comptage zéro au début de chaque nouveau cycle de comptage par onze si un bit d'insertion du code 10B1C n'a pas été détecté par le circuit de recherche de découpage de blocs 20 au cours de l'état de comptage "10" du compteur et de maintenir ce blocage tant qu'un tel bit d'insertion C n'a pas été détecté. Grâce à son comportement, la bascule de type RS 51 permet de synchroniser l'état de comptage "10" du compteur de la base de temps bloc 30 sur la détection dans le train numérique des bits d'insertion C du code 10B1C au niveau du deuxième étage 12 du registre à décalage du circuit de recherche de configuration de mot de verrouillage 10 ou encore sur les passages au niveau logique 1 du signal de reconnaissance de configuration de mot de verrouillage Ct qui correspondent soit à de véritables mots de verrouillage soit à des imitations du mot de verrouillage ayant le même positionnement que ce dernier par rapport au découpage de blocs.

La base de temps trame 40 est constituée d'un compteur par soixante à remise à zéro asynchrone incrémenté sur les fronts montants de son signal d'horloge. Ce compteur a son entrée de comptage connectée à la sortie 31 de la base de temps bloc 30 et son entrée de remise à zéro connectée à une sortie 82 du circuit de contrôle d'acquisition de verrouillage de trame 80. Il reçoit comme signal de comptage le signal d'horloge bloc Hm et délivre en sortie 41 un signal d'horloge trame Ht constitué d'un signal binaire passant au niveau logique 1 pour l'état 0 de comptage et restant au niveau logique 0 pour les autres états de comptage.

Le compteur de la base de temps trame 40 compte les soixante blocs de code 10B1C contenus dans chaque trame. Il est remis à zéro, pour la synchronisation de l'horloge trame Ht, par un signal binaire VR de recherche de verrouillage trame délivré par le circuit de contrôle d'acquisition de verrouillage de trame 80 sur sa sortie 82. Ce signal de recherche de verrouillage VR passe au niveau logique 1 et maintient le compteur de la base de temps trame 40 à l'état de comptage 0 lorsque le verrouillage de trame est considéré comme perdu et qu'aucune configuration de mot de verrouillage apparue dans le train numérique n'a encore été choisie par le dispositif. Il repasse au niveau logique 0 dès que le dispositif a détecté dans le train numérique une configuration de mot de verrouillage de trame a l'a adoptée comme véritable mot de verrouillage de manière à synchroniser l'état de comptage 0 du compteur de la base de temps trame 40 avec l'apparition dans le train numérique de la première configuration de mot de verrouillage adoptée comme véritable mot de verrouillage.

Le circuit de définition de fenêtres temporelles 60 définit des fenêtres temporelles de recherche de configuration de mot de verrouillage qui durent un intervalle de temps bit du train numérique et apparaissent soit à la cadence des blocs soit à la cadence des trames en fonction de la valeur du signal de recherche de verrouillage VR engendré par le circuit de contrôle d'acquisition de verrouillage de trame 80, et qui occupent des intervalles de temps bit du train numérique ayant le même positionnement par rapport au découpage de blocs que les états logiques 1 du signal de reconnaissance de configuration Ct provoqués par des apparitions de véritables mots de verrouillage dans le train numérique. Il comporte une porte logique de type "et" 61 à deux entrées connectées l'une à la sortie 31 de la base de temps bloc 30 et l'autre à la sortie 41 de la base de temps trame 40, et un circuit multiplexeur 62 à deux entrées de données, qui a ses deux entrées de données connectées l'une à la sortie 31 de la base de temps bloc 30 et l'autre à la sortie de la porte logique de type "et" 61, et son entrée d'adressage connectée à la sortie 82 du circuit de contrôle d'acquisition de verrouillage de trame 80, la sortie du multiplexeur 62 constituant la sortie 63, du circuit de définition de fenêtres temporelles 60.

Un niveau logique 1 du signal de recherche de verrouillage de trame VR entraîne la sélection par le multiplexeur 62 de son entrée de données directement reliée à la sortie 31 de la base de temps bloc 30 et un niveau logique 0 la sélection par le multiplexeur 62 de son entrée relié à la sortie de la porte logique de type "et" 61. De la sorte, le circuit de définition de fenêtres temporelles 60 effectue une sélection parmi les impulsions du signal d'horloge bloc Hm qui correspondent à l'état de comptage "10" du compteur de la base de temps bloc 30 pendant lequel ont toujours lieu les passages à l'état logique 1 du signal de reconnaissance de configuration Ct engendré par le circuit de recherche de configuration de mot de verrouillage de trame 10 à l'occasion de la détection de véritables mots de verrouillage ou d'imitations ayant le même positionnement que ces derniers par rapport au découpage de blocs. Cette sélection est soit totale, toutes les impulsions du signal d'horloge bloc Hm étant retenues lorsque le signal de recherche de mot de verrouillage VR est à l'état logique 1 signifiant que le verrouillage de trame est perdu et qu'aucune configuration de mot de verrouillage n'a encore été retenue par le dispositif, soit partielle, seules les impulsions du signal d'horloge bloc Hm coïncidant avec les impulsions du signal d'horloge trame Ht étant retenues lorsque le signal de recherche de mot de verrouillage de trame VR est à l'état logique 0 signifiant qu'une configuration de mot de verrouillage a déjà été retenue par le dispositif comme mot de verrouillage pour la trame en cours.

Le circuit de sélection de configuration de mot de verrouillage 70 est constitué, comme représenté à la figure 2, d'une porte logique de type "et" à deux entrées connectées l'une à la sortie 18 du circuit de recherche de configuration de mot de verrouillage 10 et l'autre à la sortie 63 du circuit de définition de fenêtres temporelles 60. Placé en sortie du circuit de recherche de configuration de mot de verrouillage de trame 10, il effectue un tri parmi les états logiques 1 du signal de reconnaissance de configuration Ct et ne retient que ceux provoqués par de véritables mots de verrouillage ou par leurs imitations ayant la même position que ces derniers par rapport au découpage de blocs, soit systématiquement lorsque le verrouillage de trame est perdu et qu'aucune configuration de mot de verrouillage de trame n'a encore été retenue, soit avec la périodicité d'une trame lorsque le verrouillage de trame est considéré comme acquis. Grâce à ce tri effectué sur les configurations de mots de verrouillage de trame reconnues, on élimine la plus grande partie des fausses synchronisations. En effet, avec l'exemple de train numérique retenu, il y a en moyenne une vingtaine d'imitations de la configuration du mot de verrouillage de trame également réparties par rapport au découpage de blocs. Sans le tri proposé, la recherche de mot de verrouillage s'étend dans une trame sur six cent soixante mots de cinq bits et nécessite onze trames pour se caler sur un vrai mot de verrouillage avec une probabilité supérieure à 99/100. Avec le tri proposé, la recherche de mot de verrouillage ne s'étend plus que sur soixante de mots de cinq bits correctement placés par rapport au découpage de blocs et ne nécessite plus que deux trames pour se caler sur un vrai mot de verrouillage avec une probabilité supérieure à 99/100.

Le circuit de contrôle d'acquisition de verrouillage de trame 80 a pour rôle, comme indiqué précédemment, d'engendrer les signaux binaires de perte de verrouillage P et de recherche de verrouillage VR. Il décide qu'il y a perte ou acquisition de verrouillage de trame dès que les mots de verrouillage de trois trames successives n'ont pas été ou ont été reconnus. Il comporte, comme représenté à la figure 4, un registre à décalage à trois étages connecté en entrée de données à la sortie du circuit de sélection de configuration de mot de verrouillage 70 et en entrée d'horloge à la sortie 63 du circuit de définition de fenêtres 60, une porte logique de type "et" 86 à trois entrées et une porte logique de type "non ou" 87 à trois entrées dont les entrées sont connectées aux sorties non complémentées des trois étages 83, 84 et 85 du registre à décalage, une bascule de type RS 88 avec son entrée de remise à zéro connectée à la sortie de la porte logique de type "et" 86 et son entrée de remise à un connectée à la sortie de la porte logique de type "non ou" 87, et une porte logique de type "non ou" 89 à deux entrées connectées l'une à la sortie non complémentée du premier étage 83 du registre à décalage et l'autre à la sortie complémentée de la bascule de type RS 88.

Le registre à décalage a ses trois étages 83, 84, 85 qui sont inscrits à la fin de chaque fenêtre temporelle élaborée par le circuit de définition de fenêtres temporelles 60, le premier étage 83 passant à l'état logique 1 si une configuration de mot de verrouillage de trame est reconnue au cours de la fenêtre temporelle précédent son inscription ou à l'état logique 0 dans le cas contraire.

La porte logique de type "et" 86 fait passer la bascule RS 88 à l'état logique 0 dans le cas où les trois étages 83, 84, 85 du registre à décalage passent à l'état logique 1 témoignant de la détection d'un configuration de mot de verrouillage sur trois fenêtres temporelles consécutives qui constitue un critère d'acquisition de verrouillage de trame.

La porte logique de type "non ou" 87 fait passer la bascule RS 88 à l'état logique 1 dans le cas où les trois étages 83, 84, 85 du registre à décalage passent à l'état logique 0 témoignant de la non détection d'une configuration de mot de verrouillage sur trois fenêtres temporelles consécutives qui constitue un critère de perte de verrouillage de trame.

La bascule de type RS 88 mémorise par son état le dernier des critères d'acquisition ou de perte de verrouillage de trame qui a été vérifié. Le signal binaire P de perte de verrouillage est prélevé sur sa sortie non complémentée Q.

La porte logique de type "non ou" 89 engendre le signal binaire VR de recherche de verrouillage, sa sortie passant au niveau logique 1 lorsque la bascule de type RS 88 est à l'état 1 signifiant une perte de verrouillage de trame et que le premier étage 83 du registre à décalage est à l'état 0 signifiant qu'une configuration de mot de verrouillage n'a pas été reconnue au cours de la dernière fenêtre temporelle.

Le dispositif qui vient d'être décrit présente trois phases distinctes de fonctionnement :
- une première phase correspondant à une perte de verrouillage de trame, le mot de verrouillage de trame n'ayant pas été reconnu sur trois trames successives, et où la dernière reconnaissance d'un mot de verrouillage de trame remonte à plus d'une trame, première phase au cours de laquelle la base de temps bloc 30 est synchronisée en permanence sur le train numérique par le circuit de détection de découpage de blocs 20 et la base de temps trame 40 bloquée dans l'attente de la reconnaissance de la première configuration de mot de verrouillage de trame et où le circuit de définition de fenêtres temporelles 60 élabore des fenêtres temporelles de recherche de configuration à la cadence des blocs de données,
- une deuxième phase de fonctionnement correspondant encore à une perte de verrouillage de trame mais où la dernière reconnaissance d'un mot de verrouillage de trame ne remonte pas a plus d'une trame, deuxième phase au cours de laquelle la base de temps blocs 30 est encore synchronisée en permanence sur le train numérique par le circuit de détection de découpage de bloc 20 mais où la base de temps trame 40 est débloquée depuis la reconnaissance du mot de verrouillage et où le circuit de définition de fenêtres temporelles élabore des fenêtres temporelles de recherche de configuration à la cadence des trames et
- une troisième phase correspondant à une acquisition de verrouillage de trame, un mot de verrouillage de trame ayant été reconnu sur trois trames consécutives et le restant, depuis, sur au moins une trame sur trois, troisième phase au cours de laquelle la base de temps bloc 30 n'est plus synchronisée sur le train numérique par le circuit de recherche de découpage de blocs 20 mais fonctionne librement afin d'éviter une désynchronisation sur des bits de données faux résultant d'erreurs de transmissions, où la base de temps trame reste débloquée et où le circuit de définition de fenêtres temporelles continue à élaborer des fenêtres temporelles de recherche de configuration à la cadence des trames.

On peut, sans sortir du cadre de l'invention modifier certaines dispositions ou remplacer certains moyens équivalents. On peut notamment modifier le circuit de recherche de configuration de mot de verrouillage de trame pour l'adapter à un mot de verrouillage réparti par exemple en donnant à son registre à décalage un nombre d'étages suffisant pour contenir la portion de trame sur laquelle s'étend un mot de verrouillage et en utilisant une sélection adéquate des sorties des étages du registre ou, si le mot de verrouillage réparti a des éléments ayant une même position dans les blocs par rapport au bit d'insertion C, à l'aide d'un registre à décalage rythmé par une version de l'horloge bloc convenablement déphasée et de longueur suffisante pour contenir tous les bits du mot de verrouillage compte tenu de son rythme d'inscription, la détection du bit d'insertion se faisant à l'aide d'un registre spécifique à deux étages, inscrit à la cadence bit.

## Revendications

1. Dispositif de synchronisation de trame pour un train numérique synchrone partagé en blocs au moyen d'un code par blocs et structuré en trames repérées par des mots de verrouillage, comportant un circuit (10) de recherche de configuration de mot de verrouillage opérant sur le train numérique et engendrant un signal de reconnaissance à chaque configuration reconnue, une base de temps trame (40) délivrant un signal d'horloge au rythme des trames, un circuit (20) de recherche de découpage de blocs repérant dans le train numérique des emplacements possibles de transitions entre blocs de données, une base de temps bloc (30) délivrant un signal d'horloge bloc au rythme des blocs, et un circuit (50) de synchronisation de la base de temps bloc (30) contrôlé par le circuit (20) de recherche de découpage de blocs, caractérisé en ce qu'il comporte :
- un circuit (60) de définition de fenêtres temporelles élaborant à partir des signaux des bases de temps bloc (30) et trame (40), au rythme soit de l'horloge bloc soit de l'horloge trame, des fenêtres temporelles de recherche de configuration de mot de verrouillage occupant par rapport au découpage de blocs la même position qu'un signal de reconnaissance de configuration émis par le circuit (10 ) de recherche de configuration pour un véritable mot de verrouillage,
- un circuit (70) de sélection de configuration de mot de verrouillage opérant sous la commande du circuit (10) de recherche de configuration de mot de verrouillage et du circuit (60) de définition de fenêtres temporelles et sélectionnant les signaux de reconnaissance de configuration coïncidant avec les fenêtres temporelles de recherche de configuration et
- un circuit (80) de contrôle d'acquisition de mot de verrouillage qui opère sous la commande du circuit (70) de sélection de configuration et qui, en l'absence de sélection de configuration de mot de verrouillage sur plusieurs trames successives, commande au circuit (60) de définition de fenêtres temporelles, l'élaboration de fenêtres temporelles au rythme de l'horloge bloc et qui, dès reconnaissance d'une sélection de configuration de mot de verrouillage, synchronise la base de temps trame (40) sur l'apparition de cette configuration sélectionnée et commande au circuit de définition de fenêtres temporelles l'élaboration de fenêtres temporelles au rythme de l'horloge trame.

2. Dispositif selon la revendication 1, caractérisé en ce que la base de temps trame (40) fonctionne à partir du signal d'horloge bloc délivré par la base de temps bloc (30) et en ce que le circuit (80) de contrôle d'acquisition de mot de verrouillage contrôle le circuit (50) de synchronisation de la base de temps bloc (30) de manière à l'activer en l'absence de sélection de configuration de mot de verrouillage sur plusieurs trames successives et à l'inhiber dès la reconnaissance d'une sélection de configuration de mot de verrouillage sur plusieurs trames successives.

## Claims

1. Frame synchronisation device for a synchronous digital bit stream divided into blocks by means of a block code and structured in frames marked by alignment words, comprising an alignment word configuration recognition circuit (10) adapted to operate on the digital bit stream and to generate a recognition signal on each recognised configuration, a frame timebase (40) adapted to deliver a clock signal at the frame timing rate, a block recognition circuit (20) adapted to mark in the digital bit stream possible locations of transitions between data blocks, a block timebase (30) adapted to deliver a block clock signal at the block timing rate, and a circuit (50) for synchronising the block timebase (30) controlled by the block recognition circuit (20), characterised in that it comprises:
- a time window definition circuit (60) adapted to produce from the signals from the block timebase (30) and the frame timebase (40) at the timing rate of the block clock or of the frame clock alignment word configuration search time windows occupying relative to the blocks the same position as a configuration recognition signal sent by the configuration recognition circuit (10) for a true alignment word,
- an alignment word configuration selection circuit (70) adapted to operate under the control of the alignment word configuration recognition circuit (10) and the time window definition circuit (60) and to select configuration recognition signals coinciding with the configuration search time windows, and
- an alignment word acquisition control circuit (80) adapted to operate under the control of the configuration selection circuit (70) and which, in the absence of alignment word configuration selection over multiple consecutive frames, commands the time window definition circuit (60) to generate time windows at the block clock timing rate and which immediately alignment word configuration selection is recognised synchronises the frame timebase (40) to the occurrence of the selected configuration and commands the time window definition circuit to generate time windows at the frame clock timing rate.

2. Device according to claim 1 characterised in that the frame timebase (40) is adapted to operate on the block clock signal supplied by the block timebase (30) and the alignment word acquisition control circuit (80) is adapted to control the circuit (50) for synchronising the block timebase (30) so as to enable it in the absence of alignment word configuration selection over multiple consecutive frames and so as to disable it immediately an alignment word configuration is selected over multiple consecutive frames.

## Patentansprüche

1. Vorrichtung zur Rahmensynchronisation für eine mit Hilfe eines Blockkodes in Blöcke aufgeteilte und mit Hilfe von Verriegelungswörtern in Rahmen strukturierte synchrone Datenfolge, mit einer Schaltung (10) zur Suche nach einer Verriegelungswort-Konfiguration, die die Datenfolge untersucht und ein Erkennungssignal bei jeder erkannten Konfiguration erzeugt, mit einer Rahmenzeitbasis (40), die ein Taktsignal im Rahmenrhythmus liefert, mit einer Schaltung (20) zur Suche nach der Blockunterteilung, die in der Datenfolge mögliche Übergänge zwischen Datenblöcken erfaßt, mit einer Blockzeitbasis (30), die ein Blocktaktsignal im Blockrhythmus liefert, und mit einer Schaltung (50) zur Synchronisation der Blockzeitbasis (30), die von der Schaltung (20) zur Suche nach der Blockunterteilung gesteuert wird, dadurch gekennzeichnet, daß sie enthält:
- eine Schaltung (60) zur Definition von Zeitfenstern, die ausgehend von den Signalen der Blockzeitbasis (30) und der Rahmenzeitbasis (40) im Rhythmus entweder des Blocktakts oder des Rahmentakts Zeitfenster für die Suche nach der Verriegelungswort-Konfiguration erzeugt, die bezüglich der Blockunterteilung die gleiche Lage wie ein von der Schaltung (10) zur Suche der Konfiguration für ein echtes Verriegelungswort ausgesandtes Konfigurations-Erkennungssignal besitzt,
- eine Schaltung (70) zur Verriegelungs-Konfigurationsauswahl, die von der Schaltung (10) zur Suche nach der Verriegelungswort-Konfiguration und von der Schaltung (60) zur Definition von Zeitfenstern gesteuert wird und die Konfigurations-Erkennungssignale auswählt, die mit den Zeitfenstern zur Konfigurationssuche zusammenfallen,
- und eine Schaltung (80) zur Kontrolle der Erfassung des Verriegelungsworts, die von der Schaltung (70) zur Konfigurationsauswahl gesteuert wird und in Abwesenheit einer Auswahl einer Verriegelungswort-Konfiguration über mehrere aufeinanderfolgende Rahmen die Schaltung (60) zur Definition von Zeitfenstern veranlaßt, Zeitfenster im Rhythmus des Blocktakts zu erzeugen, und sobald eine Auswahl einer Verriegelungswort-Konfiguration erkannt worden ist, die Rahmenzeitbasis (40) auf das Auftreten dieser ausgewählten Konfiguration synchronisiert und die Schaltung zur Definition von Zeitfenstern veranlaßt, Zeitfenster im Rhythmus des Rahmentakts zu erzeugen.

2. Vorrichtung nach Anspruch 1, dadurch gekennzeichnet, daß die Rahmenzeitbasis (40) aufgrund des Blocktaktsignals betrieben wird, das von der Blockzeitbasis (30) geliefert wird, und daß die Schaltung (80) zu Kontrolle der Erfassung des Verriegelungsworts die Schaltung (50) zur Synchronisierung der Blockzeitbasis (30) so steuert, daß sie in Abwesenheit der Auswahl einer Verriegelungswort-Konfiguration über mehrere aufeinanderfolgende Rahmen hinweg aktiviert wird und sofort bei Erfassung einer Verriegelungswort-Konfiguration über mehrere aufeinanderfolgende Rahmen hinweg gesperrt wird.
